# EUROPEAN PATENT SPECIFICATION

(11) **EP 3 977 007 B1**
(45) Date of publication and mention of the grant of the patent: **17.06.2026**
(21) Application number: 20815433.6
(22) Date of filing: 28.04.2020
(51) Int. Cl.: F21V 1/00, B29C 45/00, F21V 1/14, F21V 1/22, F21V 1/26, F21V 1/16, F21V 3/02, F21V 3/04, F21V 3/06

(54) **LAMP SHADE AND METHOD FOR PRODUCING A LAMP SHADE**
LAMPENSCHIRM UND VERFAHREN ZUR HERSTELLUNG EINES LAMPENSCHIRMES
ABAT-JOUR ET PROCÉDÉ DE PRODUCTION D'UN ABAT-JOUR

(30) Priority: 24.05.2019 SE 1950617
(43) Date of publication of application: 06.04.2022
(73) Proprietor: Inter IKEA Systems B.V., 2616 LN Delft (NL)
(72) Inventor: PREUTZ, Henrik, 34334 Älmhult (SE)
(74) Representative: Ström & Gulliksson AB
(86) International application number: PCT/SE2020/050425
(87) International publication number: WO 2020/242359

(56) References cited:
- CN-U- 203 784 699
- CN-U- 205 480 786
- GB-A- 956 199
- KR-A- 20130 068 512
- US-A- 4 743 420
- US-A- 5 305 911
- US-A1- 2009 086 494
- US-A1- 2013 101 696
- YANG, S. Y. ET AL.: "A Study of Rib Geometry for Gas-Assisted Injection Molding", POLYMER ENGINEERING AND SCIENCE, vol. 36, no. 23, December 1996 (1996-12-01), pages 2824 - 2831, XP000697804, ISSN: 1548-2634, DOI: 10.1002/pen.10683

## Description

### Technical field

The present disclosure relates to a lamp shade, comprising an inner face and an outer face. The outer face has an approximately overall convex shape and the inner face has a correspondingly approximately overall concave shape, such that a partly closed inner space may be formed between the lamp shade and a wall or the like, if attached thereto. The lamp shade is formed in a translucent plastic material, colored with a dye. The disclosure further relates to a method for producing a lamp shade.

### Background

Such lamp shades may typically be attached to a wall in a children's room to provide a softly colored lighting effect. A general problem associated with lamp shades of this kind is how to produce them in an efficient manner to provide a product at a low cost to the end user. Document US 2009/0086494 A1 discloses a lampshade.

### Summary

One object of the present disclosure is thus to provide a lamp shade that can be produced in an efficient manner. This object is achieved by a lamp shade as defined in claim 1. More particularly, in a lamp shade of the initially mentioned kind, there is provided at least one inner ridge of increased thickness, projecting from the inner face and extending over a part of the lamp shade inner face. When produced, typically by injection molding, such a ridge provides for a flow path for molten material which facilitates molten plastic material's distribution over the entire tool space forming the lamp shade. This allows, at the lateral sides of the ridge, the lamp shade to be very thin, thereby providing a high light flow there through. At the same time, the risk is reduced of having some space in a tool unfilled by the plastic material, thereby leading to a faulty final product with a hole in the lamp shade face. Therefore, the provision of these ridges provides an increased production yield leading to an efficiently produced product. The ridges may also provide esthetically interesting patterns to the lamp shade surface, in particular when a light source is lit inside the lamp shade, and more light will be emitted via the portions located between the ridges than via the ridges themselves.

A corresponding outer ridge projects from the outer face and extends, at least partly aligned with the inner ridge, over a part of the lamp shade outer face. This provides an even stronger flow pattern. However, in cross a section, the outer ridge projects a distance dₒ from the surrounding surface of the outer face which is less than a factor 0.8, such as 0.6, of to the distance dᵢ the inner ridge projects from the surrounding surfaces of inner face. This means that the outer face will e.g. collect dust to a lesser extent.

The distance dᵢ the inner ridge projects from the surrounding surfaces of the inner face may be in the range 0.1-2.5 mm, preferably 0.3-2.0 mm, and most preferably 0.4-1.5 mm.

The distance dₒ the outer ridge projects from the surrounding surfaces of said outer face may be in the range 0.1-1.5 mm, preferably 0.2-1.0 mm, and most preferably 0.3-0.8 mm.

The outer face may even be smooth and have no outer ridges at the location of the inner ridge.

The thickness dₛ of the lamp shade in areas surrounding said inner ridge may be in the range 0.2-1.0 mm, preferably 0.3-0.8 mm, and most preferably 0.3-0.6 mm.

A plurality of such inner ridges may be provided, and optionally at least some of the inner ridges may be interconnected. This provides efficient flow patterns over the surface as a whole.

The lamp shade may comprise, at its periphery, an edge portion configured to be directed towards a wall to which the lamp shade is intended to be attached. This enlarges the inner space created by the lamp shade and reduces light flow parallel to e.g. a wall surface.

The lamp shade is typically provided by injection molding in a material in the group including polypropylene, PP, polyamide, PA, polyethylene terephthalate, PET, recycled PET, acrylonitrile butadiene styrene, ABS, synthetic rubber, polyethylene, PE, polylactic acid, PLA, and polymethylmethacrylate, PMMA, for instance.

The inner face may comprise means for attaching the lamp shade to a wall or the like.

The present disclosure further relates to a method for producing a lamp shade comprising an inner face and an outer face, wherein the outer face is has an approximately overall convex shape and the inner face has a correspondingly approximately overall concave shape, such that a partly closed inner space may be formed between the lamp shade and a wall or the like if attached thereto, wherein the lamp shade is formed at least partly in a translucent plastic material, colored with a dye. The method includes injection molding the lamp shade with at least one tool channel of increased thickness, extending over a part of the lamp shade surface, forming in the lamp shade at least one inner ridge of increased thickness, projecting from the inner face and extending over a part of the lamp shade inner face.

The method may be varied and altered in correspondence with the above-discussed lamp shade.

### Brief description of the drawings

Fig 1 illustrates a front view of a lamp shade according to the present disclosure.
Fig 2 shows a cross section of the lamp shade in fig 1.
Fig 3 shows a perspective view of the lamp shade as seen from a wall and with fastening means partly removed.

### Detailed description

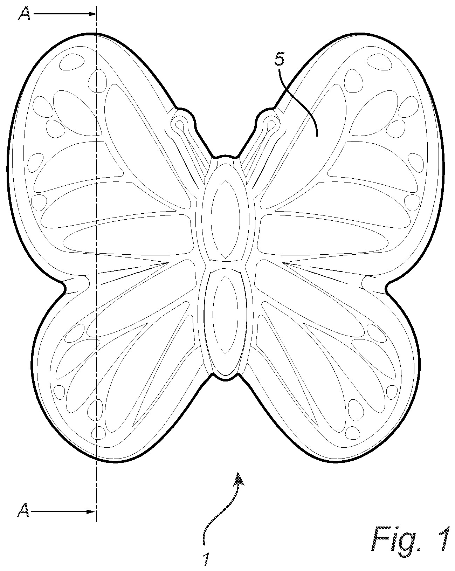

The present disclosure relates to a lamp shade as illustrated with an example in the front view of fig 1. This lamp shade is typically intended for a wall-attached lamp for example in a children's room and is typically made in one piece by injection-molding a plastic material. Typical materials used include polypropylene, PP, polyamide, PA, polyethylene terephthalate, PET, recycled PET, acrylonitrile butadiene styrene, ABS, synthetic rubber, polyethylene, PE, polylactic acid, PLA, and polymethylmethacrylate, PMMA, for instance. The lamp shade may be figurative, in the illustrated case a butterfly. The view of fig 1 shows the lamp as seen attached to a wall, showing the outer face 5 of the lamp shade. The lamp shade 1 may be made in a translucent plastic material which is colored with a dye, such that, when lit by an electric lamp inside the lamp shade, it may emit a toned light.

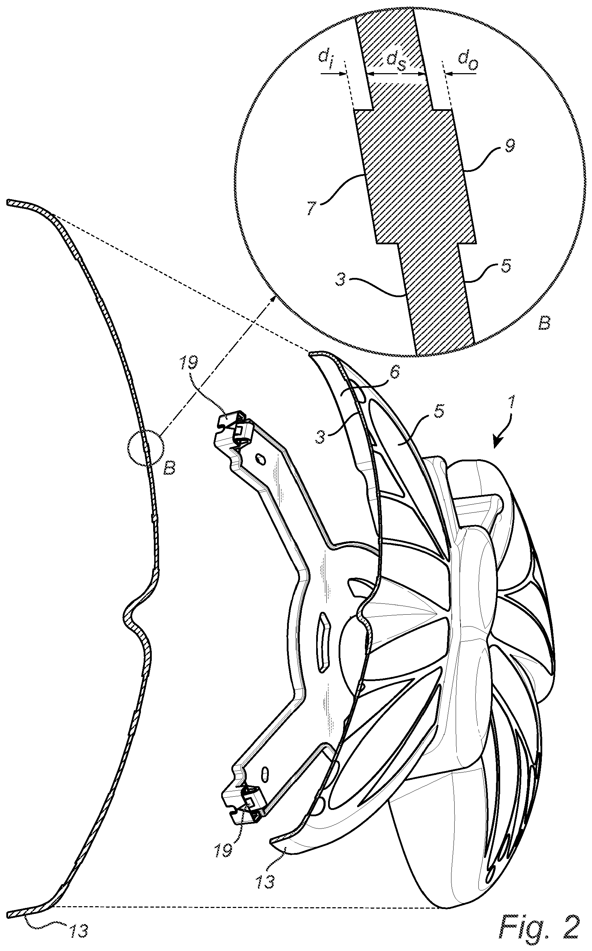

Fig 2 shows partially a cross section of the lamp shade in fig 1, along the line A-A of fig 1. As shown, the lamp shade 1 has an inner face 3 and an outer face 5, where the latter has an approximately overall convex shape and the former a correspondingly approximately overall concave shape, such that the lamp shade bulges or arches outwardly. This forms a partly closed inner space 6 between the lamp shade 1 and a wall or the like, when the lamp shade is attached thereto, which provides room optionally for a lamp, driving electronics therefore, and an attachment device for attaching the lamp shade to the wall or the like.

The lamp shade comprises at least one inner ridge 7 of increased thickness, projecting from the inner face 3, as illustrated in the enlarged portion B of the cross section. The inner ridge 7 extends over at least a part of the lamp shade inner face 3, and facilitates, during production, the flow of molten plastic material over the entire surface forming the lamp shade 1. This allows the lamp shade to be thinner in other areas, located at the sides of the ridges, with a maintained production yield. This provides for a greater light flow through the lamp shade at a given lamp power. Further, the ridges provide some structural strength, and may as illustrated provide figurative patterns, in the illustrated case the butterfly's wing veins. When the lamp is lit, the ridges give a darker pattern over the surface of the lamp shade.

As illustrated, the ridge 7 may have an approximately rectangular shape, although other shapes, such as a triangular shape or a half-circular shape would be equally possible.

According to the invention, corresponding outer ridges 9 project from the outer face 5 of the lamp shade 1. The outer ridges extend at least partly aligned with corresponding inner ridge 7 over a part of the lamp shade outer face 5, as illustrated in the enlarged portion of fig 2.

According to the invention, such outer ridges 9, are less protruding, projecting a distance dₒ from the surrounding parts of the outer face 5 of the lamp shade which is less than a factor 0.8 of the distance dᵢ the inner ridge 7 projects from the inner face 3. In the illustrated case, dᵢ is about 0.85 mm while dₒ is about 0.55 mm, and the surrounding part of the outer face 5 is about 0.4 mm thick. Having a less protruding outer ridge means that the lamp shade 1 will be less prone to collect dust. It is also possible to let the outer face 5 be smooth at the inner ridge 7. The pattern formed by the inner ridges 7 will still be visible when the lamp in the lamp shade 1 is lit.

The distance dᵢ the inner ridge projects from the surrounding surfaces of the inner face may be in the range 0.1-2.5 mm, preferably 0.3-2.0 mm, and most preferably 0.4-1.5 mm.

The distance dₒ the outer ridge projects from the surrounding surfaces of said outer face may be in the range 0.1-1.5 mm, preferably 0.2-1.0 mm, and most preferably 0.3-0.8 mm.

The thickness dₛ of the lamp shade in areas surrounding said inner ridge 7 may be in the range 0.2-1.0 mm, preferably 0.3-0.8 mm, and most preferably 0.3-0.6 mm.

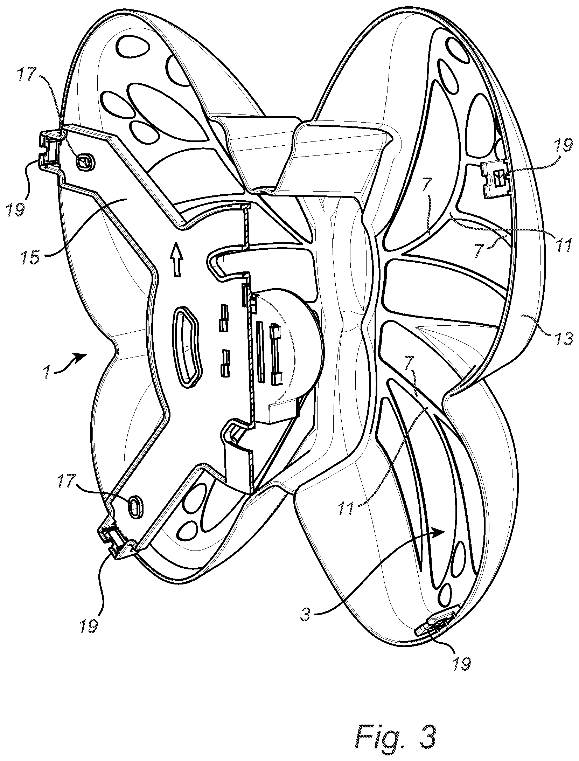

Fig 3 shows a perspective view of the lamp shade as seen from a wall and with fastening means 15 partly removed. A shown, a plurality of inner ridges 7 may be provided over the inner face 3 of the lamp shade 1, and as is evident from fig 1 corresponding outer ridges 9 may be provided as well. At least some of the inner ridges 7 may be interconnected at crossings 11, further improving distribution of molten plastic material during production.

The lamp shade 1 may as showed in fig 2 and 3 include a peripheral edge portion 13 configured to be directed towards a wall to which the lamp shade 1 is intended to be attached. This gives a larger inner space created by the lamp and reduces or stops uncolored light flow parallel to e.g. a wall surface. The peripheral edge portion 13 also makes the lamp shade as a whole stiffer. In some cases, this edge portion may be wholly or partly directed more or less perpendicularly to the wall, although as shown in fig 2, a more obliquely directed edge portion 13 is as useful.

There may be provided a fastening device 15 at the inner face 3 if the lamp shade, for attaching the lamp shade 1 to a wall or the like. Such a fastening device may comprise a lamp fitting and the like and may comprise e.g. screw holes 17 to facilitate fastening on a wall. When the fastening device has been fastened, the lamp shade 1 may be attached thereto using snap locks 19.

The present disclosure also relates to a corresponding method for producing a lamp shade comprising an inner face and an outer face. The outer face has an approximately overall convex shape and the inner face has a correspondingly approximately overall concave shape, such that a partly closed inner space may be formed between the lamp shade and a wall or the like if attached thereto. The lamp shade is produced at least partly in a translucent plastic material, which is colored with a dye. In the method, injection molding of the lamp shade takes place with a tool having at least one tool channel of increased thickness, extending over a part of the lamp shade surface, forming in the lamp shade at least one inner ridge of increased thickness, projecting from the inner face and extending over a part of the lamp shade inner face.

The present disclosure is not restricted to the above examples and may be varied and altered in different ways within the scope of the appended claims.

## Claims

1. A lamp shade (1) comprising an inner face (3) and an outer face (5),
wherein the outer face (5) has an approximately overall convex shape and the inner face (3) has a correspondingly approximately overall concave shape, such that a partly closed inner space (6) may be formed between the lamp shade (1) and a wall or the like, if attached thereto,
wherein the lamp shade (1) is formed in a translucent plastic material, colored with a dye, the lamp shade (1) comprising at least one inner ridge (7) of increased thickness, projecting from the inner face (3) and extending over a part of the lamp shade inner face (3),
wherein a corresponding outer ridge (9) projects from the outer face (5) and extends, at least partly aligned with the inner ridge (7), over a part of the lamp shade outer face (5), **characterized in that**
in a cross section, the outer ridge (9) projects a distance dₒ from the surrounding surfaces of said outer face (5) which is less than a factor 0.8 of the distance dᵢ the inner ridge (7) projects from the surrounding surfaces of the inner face (3).

2. Lamp shade according to any of the preceding claims, wherein the distance dᵢ the inner ridge (7) projects from the surrounding surfaces of the inner face (3) is in the range 0.1-2.5 mm, preferably 0.3-2.0 mm, and most preferably 0.4-1.5 mm.

3. Lamp shade according to any of claims 1 or 2, wherein the distance dₒ the outer ridge (9) projects from the surrounding surfaces of said outer face (5) is in the range 0.1-1.5 mm, preferably 0.2-1.0 mm, and most preferably 0.3-0.8 mm.

4. Lamp shade according to claim 1, wherein the outer face (5) is smooth at the inner ridge (7).

5. Lamp shade according to any of the preceding claims, wherein the thickness dₛ of the lamp shade (1) in areas surrounding said inner ridge (7) is in the range 0.2-1.0 mm, preferably 0.3-0.8 mm, and most preferably 0.3-0.6 mm.

6. Lamp shade according to any of the preceding claims, wherein a plurality of such inner ridges (7) are provided.

7. Lamp shade according to claim 6, wherein at least some of the inner ridges (7) are interconnected.

8. Lamp shade according to any of the preceding claims, wherein the lamp shade (1) comprises, at its periphery, an edge portion (13) configured to be directed towards a wall to which the lamp shade (1) is intended to be attached.

9. Lamp shade according to any of the preceding claims, which is provided by injection molding.

10. Lamp shade according to claim 9, which is produced in a material in the group including polypropylene, PP, polyamide, PA, polyethylene terephthalate, PET, recycled PET, acrylonitrile butadiene styrene, ABS, synthetic rubber, polyethylene, PE, polylactic acid, PLA, and polymethylmethacrylate, PMMA.

11. Lamp shade according to any of the preceding claims, wherein the inner face comprises means (15) for attaching the lamp shade (1) to a wall or the like.

12. A method for producing a lamp shade (1) for a wall-attached lamp, the lamp shade (1) comprising an inner face (3) and an outer face (5), wherein the outer face (5) has an approximately overall convex shape and the inner face (3) has a correspondingly approximately overall concave shape, such that a partly closed inner space (6) may be formed between the lamp shade (1) and a wall or the like if attached thereto, wherein the lamp shade (1) is formed at least partly in a translucent plastic material, colored with a dye, the method **characterized by** injection molding the lamp shade (1) with at least one tool channel of increased thickness, extending over a part of the lamp shade surface, forming in the lamp shade (1) at least one inner ridge (7) of increased thickness, projecting from the inner face (3) and extending over a part of the lamp shade inner face (6), and a corresponding outer ridge (9) projecting from the outer face (5) and extending, at least partly aligned with the inner ridge (7), over a part of the lamp shade outer face (5), wherein in a cross section, the outer ridge (9) projects a distance dₒ from the surrounding surfaces of said outer face which is less than a factor 0.8 of the distance dᵢ the inner ridge (7) projects from the surrounding surfaces of the inner face (3).

## Patentansprüche

1. Lampenschirm (1), der eine Innenfläche (3) und eine Außenfläche (5) aufweist,
wobei die Außenfläche (5) eine näherungsweise insgesamt konvexe Form aufweist und die Innenfläche (3) eine entsprechend näherungsweise insgesamt konkave Form aufweist, derart, dass ein teilweise geschlossener Innenraum (6) zwischen dem Lampenschirm (1) und einer Wand oder dergleichen gebildet werden kann, wenn dieser daran befestigt ist,
wobei der Lampenschirm (1) aus einem lichtdurchlässigen Kunststoffmaterial gebildet ist, das mit einem Farbstoff gefärbt ist, wobei der Lampenschirm (1) mindestens eine innere Leiste (7) mit erhöhter Dicke aufweist, die von der Innenfläche (3) vorsteht und sich über einen Abschnitt der Lampenschirm-Innenfläche (3) erstreckt,
wobei eine entsprechende äußere Leiste (9) von der Außenfläche (5) vorsteht und sich zumindest teilweise auf die innere Leiste (7) ausgerichtet über einen Abschnitt der Lampenschirm-Außenfläche (5) erstreckt,
**dadurch gekennzeichnet, dass**
die äußere Leiste (9) im Querschnitt um einen Abstand dₒ von den umgebenden Flächen der Außenfläche (5) vorsteht, der kleiner als ein Faktor 0,8 des Abstands dᵢ, um den die innere Leiste (7) von den umgebenden Flächen der Innenfläche (3) vorsteht, ist.

2. Lampenschirm nach einem der vorhergehenden Ansprüche, wobei der Abstand dᵢ, um den die innere Leiste (7) von den umgebenden Flächen der Innenfläche (3) vorsteht, im Bereich von 0,1-2,5 mm, vorzugsweise 0,3-2,0 mm und am stärksten bevorzugt 0,4-1,5 mm liegt.

3. Lampenschirm nach einem der Ansprüche 1 oder 2, wobei der Abstand dₒ, um den die äußere Leiste (9) von den umgebenen Flächen der Außenfläche (5) vorsteht, im Bereich von 0,1-1,5 mm, vorzugsweise 0,2-1,0 mm und am stärksten bevorzugt 0,3-0,8 mm liegt.

4. Lampenschirm nach Anspruch 1, wobei die Außenfläche (5) an der inneren Leiste (7) glatt ist.

5. Lampenschirm nach einem der vorhergehenden Ansprüche, wobei die Dicke dₛ des Lampenschirms (1) in Bereichen, die die innere Leiste (7) umgeben, im Bereich von 0,2-1,0 mm, vorzugsweise 0,3-0,8 mm und am stärksten bevorzugt 0,3-0,6 mm liegt.

6. Lampenschirm nach einem der vorhergehenden Ansprüche, wobei mehrere derartige innere Leisten (7) vorgesehen sind.

7. Lampenschirm nach Anspruch 6, wobei zumindest einige der inneren Leisten (7) verbunden sind.

8. Lampenschirm nach einem der vorhergehenden Ansprüche, wobei der Lampenschirm (1) an seinem Rand einen Kantenabschnitt (13) umfasst, der konfiguriert ist, in Richtung einer Wand, an der der Lampenschirm (1) befestigt werden soll, gerichtet zu sein.

9. Lampenschirm nach einem der vorhergehenden Ansprüche, der durch Spritzguss bereitgestellt wird.

10. Lampenschirm nach Anspruch 9, der aus einem Material aus der Gruppe angefertigt ist, die Polypropylen, PP, Polyamid, PA, Polyethylenterephthalat, PET, wiederaufbereitetes PET, Acrylnitril-Butadien-Styrol, ABS, synthetischen Kautschuk, Polyethylen, PE, Polyactid, PLA und Polymethylmethacrylat, PMMA, enthält.

11. Lampenschirm nach einem der vorhergehenden Ansprüche, wobei die Innenfläche Mittel (15) zum Befestigen des Lampenschirms (1) an einer Wand oder dergleichen aufweist.

12. Verfahren zum Anfertigen eines Lampenschirms (1) für eine wandmontierte Lampe, wobei der Lampenschirm (1) eine Innenfläche (3) und eine Außenfläche (5) umfasst, wobei die Außenfläche (5) eine näherungsweise insgesamt konvexe Form aufweist und die Innenfläche (3) eine entsprechend näherungsweise insgesamt konkave Form aufweist, derart dass ein teilweise geschlossener Innenraum (6) zwischen dem Lampenschirm (1) und einer Wand oder dergleichen gebildet werden kann, wenn dieser daran befestigt ist, wobei der Lampenschirm (1) zumindest teilweise aus einem lichtdurchlässigen Kunststoffmaterial gebildet ist, das mit einem Farbstoff gefärbt ist, wobei das Verfahren **gekennzeichnet ist durch** Spritzgießen des Lampenschirms (1) mit mindestens einem Werkzeugkanal mit erhöhter Dicke, der sich über einen Abschnitt der Lampenschirmfläche erstreckt, wobei im Lampenschirm (1) mindestens eine innere Leiste (7) mit erhöhter Dicke, die von der Innenfläche (3) vorsteht und sich über einen Abschnitt der Lampenschirm-Innenfläche (6) erstreckt, und eine entsprechende äußere Leiste (9), die von der Außenfläche (5) vorsteht und sich zumindest teilweise auf die innere Leiste (7) ausgerichtet über einen Abschnitt der Lampenschirm-Außenfläche (5) erstreckt, gebildet werden, wobei die äußere Leiste (9) im Querschnitt um einen Abstand dₒ von den umgebenden Flächen der Außenfläche vorsteht, der kleiner ist als ein Faktor 0,8 des Abstands dᵢ, um den die innere Leiste (7) von den umgebenden Flächen der Innenfläche (3) vorsteht.

## Revendications

1. Abat-jour (1) comprenant une face interne (3) et une face externe (5),
dans lequel la face externe (5) présente une forme presque entièrement convexe et la face interne (3) présente une forme presque entièrement concave correspondante, de sorte qu'un espace interne partiellement fermé (6) peut être formé entre l'abat-jour (1) et un mur ou similaire, en cas de fixation sur celui-ci,
dans lequel l'abat-jour (1) est formé en un matériau plastique translucide, coloré avec un colorant, l'abat-jour (1) comprenant au moins une arête interne (7) d'épaisseur accrue, faisant saillie à partir de la face interne (3) et s'étendant sur une partie de la face interne (3) de l'abat-jour,
dans lequel une arête externe correspondante (9) fait saillie à partir de la face externe (5) et s'étend, au moins partiellement alignée avec l'arête interne (7), sur une partie de la face externe (5) de l'abat-jour, **caractérisé en ce que**
dans une section transversale, l'arête externe (9) fait saillie sur une distance dₒ à partir des surfaces environnantes de ladite face externe (5) qui est inférieure à un facteur 0,8 de la distance dᵢ sur laquelle l'arête interne (7) fait saillie à partir des surfaces environnantes de la face interne (3).

2. Abat-jour selon l'une quelconque des revendications précédentes, dans lequel la distance dᵢ entre l'arête interne (7) et les surfaces environnantes de la face interne (3) est comprise entre 0,1 et 2,5 mm, de préférence entre 0,3 et 2,0 mm, et de la manière la plus préférée entre 0,4 et 1,5 mm.

3. Abat-jour selon l'une quelconque des revendications 1 à 2, dans lequel la distance entre l'arête externe (9) et les surfaces environnantes de ladite face externe (5) est comprise entre 0,1 et 1,5 mm, de préférence entre 0,2 et 1,0 mm, et de la manière la plus préférée entre 0,3 et 0,8 mm.

4. Abat-jour selon la revendication 1, dans lequel la face externe (5) est lisse au niveau de l'arête interne (7).

5. Abat-jour selon l'une quelconque des revendications précédentes, dans lequel l'épaisseur dₛ de l'abat-jour (1) dans des zones entourant ladite arête interne (7) est comprise entre 0,2 et 1,0 mm, de préférence entre 0,3 et 0,8 mm, et de la manière la plus préférée entre 0,3 et 0,6 mm.

6. Abat-jour selon l'une quelconque des revendications précédentes, dans lequel une pluralité de telles arêtes internes (7) sont prévues.

7. Abat-jour selon la revendication 6, dans lequel au moins certaines des arêtes internes (7) sont interconnectées.

8. Abat-jour selon l'une quelconque des revendications précédentes, dans lequel l'abat-jour (1) comprend, à sa périphérie, une partie de bord (13) configurée pour être dirigée vers un mur auquel l'abat-jour (1) est destiné à être fixé.

9. Abat-jour selon l'une quelconque des revendications précédentes, qui est fourni par moulage par injection.

10. Abat-jour selon la revendication 9, qui est produit dans un matériau du groupe incluant le polypropylène, PP, le polyamide, PA, le polyéthylène téréphtalate, PET, le PET recyclé, l'acrylonitrile butadiène styrène, ABS, le caoutchouc synthétique, le polyéthylène, PE, l'acide polylactique, PLA et le polyméthylméthacrylate, PMMA.

11. Abat-jour selon l'une quelconque des revendications précédentes, dans lequel la face interne comprend des moyens (15) pour fixer l'abat-jour (1) à un mur ou similaire.

12. Procédé de fabrication d'un abat-jour (1) pour une lampe fixée au mur, l'abat-jour (1) comprenant une face interne (3) et une face externe (5), dans lequel la face externe (5) présente une forme presque entièrement convexe et la face interne (3) présente une forme presque entièrement concave correspondante, de sorte qu'un espace interne partiellement fermé (6) peut être formé entre l'abat-jour (1) et un mur ou similaire en cas de fixation sur celui-ci, dans lequel l'abat-jour (1) est formé au moins en partie en un matériau plastique translucide, coloré avec un colorant, le procédé étant **caractérisé par le moulage par** injection de l'abat-jour (1) avec au moins un canal d'outil d'une épaisseur accrue, s'étendant sur une partie de la surface d'abat-jour, en formant dans l'abat-jour (1) au moins une arête interne (7) d'une épaisseur accrue, faisant saillie à partir de la face interne (3) et s'étendant sur une partie de la face interne (6) de l'abat-jour, et une arête externe correspondante (9) faisant saillie à partir de la face externe (5) et s'étendant, au moins en partie alignée avec l'arête interne (7), sur une partie de la face externe (5) de l'abat-jour, dans lequel, dans une section transversale, l'arête externe (9) fait saillie sur une distance dₒ à partir des surfaces environnantes de ladite face externe qui est inférieure à un facteur 0,8 de la distance dᵢ sur laquelle l'arête interne (7) fait saillie à partir des surfaces environnantes de la face interne (3).
